# EUROPEAN PATENT SPECIFICATION

(11) **EP 3 129 990 B1**
(45) Date of publication and mention of the grant of the patent: **26.05.2021**
(21) Application number: 15712936.2
(22) Date of filing: 31.03.2015
(51) Int. Cl.: H01B 3/04, H02K 3/32, H02K 3/34, H02K 15/12

(54) **AN INSULATED CONDUCTOR BAR FOR AN ELECTRIC MACHINE**
ISOLIERTER LEITERSTAB FÜR EINE ELEKTRISCHE MASCHINE
BARRE CONDUCTRICE ISOLÉE POUR MACHINE ÉLECTRIQUE

(30) Priority: 08.04.2014 EP 14163868
(43) Date of publication of application: 15.02.2017
(73) Proprietor: General Electric Technology GmbH, 5400 Baden (CH)
(72) Inventor: BAUMANN, Thomas, CH-5430 Wettingen (CH); HILLMER, Thomas, CH-5034 Suhr (CH)
(74) Representative: BRP Renaud & Partner mbB Rechtsanwälte Patentanwälte Steuerberater
(86) International application number: PCT/EP2015/056994
(87) International publication number: WO 2015/155058

(56) References cited:
- EP-A1- 0 996 131
- EP-A1- 1 478 082
- GB-A- 1 004 493
- JP-A- H0 867 736
- US-A- 4 244 985
- US-A1- 2006 280 873

## Description

### TECHNICAL FIELD

The present disclosure relates to an insulated conductor bar, a conductor bar insulation, a use of a thermoplastic material for manufacturing an insulated conductor bar, and to a method for impregnating a conductor bar.

### BACKGROUND

The insulated conductor bars described are especially used in an electric machine, in particular a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor, or also other types of rotating electric machines.

The insulated conductor bars are used for the stator and are accommodated in axial slots in the stator body. The insulated conductor bars mostly have a drilled arrangement of the strands then referred to as Roebel bars. They are insulated for high voltages when used in the technical field of generators. This free volume is filled with a thermosetting resin, usually epoxy and/or unsaturated polyester. There exist various different methods how to accomplish this, see for instance: C. Stone "Electric Insulation for Rotating machines", John Wiley, Interscience, chapter 4.

An object of the invention is to provide for an alternative impregnation of an insulated conductor bar and a conductor bar insulation for an electric machine.

### SUMMARY

This object is solved by the features of method claim 1 for impregnating an insulated conductor bar, the features of device claim 3 for an insulated conductor bar for an electric machine, and the features of use claim 7 defining the use of a thermoplastic material for manufacturing an insulated conductor bar.

Advantageously, thermoplastic materials in the conductor bar insulation do not need to be cured which usually needs hours of dwell time inside the moulding tool in the state of the art. In contrast, the process time is typically well below 1h when thermoplastic materials are used.

A further advantage is that the thermoplastic material is not hazardous to the manufacturing personnel and environment. Thermoplastic materials develop no noxious volatile organic compounds, nor they need special precautions for storage since they are solid and chemically stable at room temperature.

A further advantage of the invention is the thermal conductivity of many thermoplastic materials being in the range of 0.25-0.3 W/mK. On the other side, for epoxy as an example of a thermo setting material the thermal conductivity is 0.18 W/mK only. This helps to increase the thermal conductivity of the entire insulation by about 30%.

Further examples of the invention are disclosed in the dependent claims.

### BRIEF DESCRIPTION OF THE DRAWINGS

Further characteristics and advantages will be more apparent from the description of a preferred but non-exclusive embodiment of the conductor bar and the method to manufacture, illustrated by way of non-limiting example in the accompanying drawings, in which:
- Figure 1: is a schematic side view of a moulding tool consisting of two parts and a conductor bar between these two parts in a first manufacturing step;
- Figure 2: is a schematic side view of a moulding tool according to Fig. 1 in a second manufacturing step with the two parts pressed against each other, a vacuum pump, and a supply feeder for molten thermoplastic material;
- Figure 3: is a schematic side view of a moulding tool according to Fig. 2 in a third manufacturing step;
- Figure 4: is a schematic side view of a moulding tool according to Fig. 3 in a fourth manufacturing step with the two parts removed from each other and the finished conductor bar to be removed from the moulding tool.

### DETAILED DESCRIPTION OF EXEMPLARY EMBODIMENTS

With reference to the figures, these show schematic side views of a moulding tool 15 for manufacturing an insulated conductor bar 3, wherein like reference numerals designate identical or corresponding parts throughout the several views. The insulated conductor bar 3 is defined as the conductor bar 3 enclosed by the insulation 4.

The insulation 4 is composed of layers of mica paper attached to a carrier of glass fabric or polyester film in order to provide mechanical pulling strength needed for the winding process, see below. The bonding of mica paper and carrier is accomplished onto the mica paper which is in the form of an 'endless' wide tape of about 1m width. Then both layers are pressed together by means of hot rolls, called calendering. For the further use the wide tape is slit in small tapes typically 20-25mm wide and 50-200mm long. These tapes of mica paper-glass fabric or mica paper-polyester films are wound spirally around the conductor bars in multiple layers until the required amount of insulation is reached.

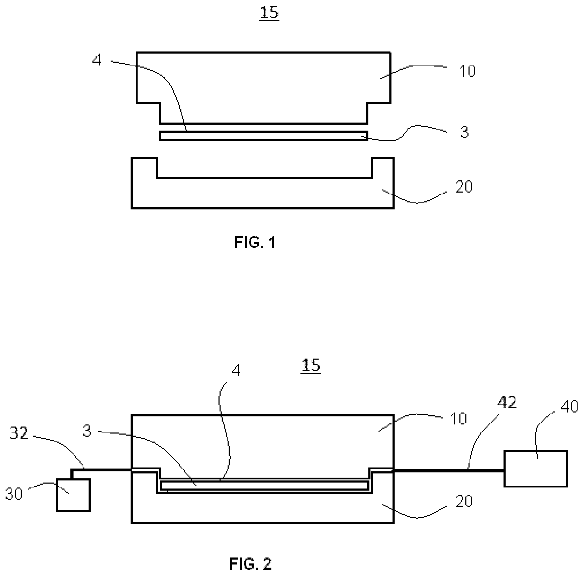

Fig. 1 shows a schematic side view of the moulding tool 15 consisting of two parts, a first part 10 above and a second part 20 below. The moulding tool 15 is an automated tool used in a fabrication process of insulating conductor bars 3 comprising heavy metal parts to apply high pressures between the first part 10 and the second part 20. The moulding tool 15 is suitable for a heat-vacuum-pressure process. The core of the conductor bar 3 is commonly made from highly conducting material, commonly copper. The first part 10 of the moulding tool 15 being rectangular with a large prominent part below to essentially fit into a recess of the second part 20. In operation the prominent part of the first part 10 abuts the conductor bar 3 from above while the recess in the second part 20 abuts the conductor bar 3 from below. With other words the conductor bar 3 is located between these two parts 10, 20 of the moulding tool 15 and essentially fills out the gap between these two parts 10, 20 in operation. Around the conductor bar 3 in the moulding tool 15 tapes are wound consisting of glass mica-paper in this example. A glass mica-paper is a mica-paper which has a support of a glass fiber fabric.

The thermoplastic material is applied onto the mica by powder dispersion and subsequent powder fusing. To this purpose, the thermoplastic powder is dispersed onto the mica paper and then fused together with the carrier preferably by means of calendering.

Examples of thermoplastic materials are polyamides of various types (PA), polyesters, especially Polybutylene-terephthalate (PBT), Polyethylene-terephthalate (PET) or Polyethylene naphthalate (PEN), polyoxymethylene (POM), polyetheretherketone (PEEK). Prepared in such a way the conductor bar 3 is aligned between the first part 10 and the second part 20 as shown in Fig. 1 in a first manufacturing step.

Mica tapes free of thermoplastic materials are used in the first step. The thermoplastic material is fed into the moulding tool 15 by the feeder 30 serving also as a reservoir for the thermoplastic material. However, in order to reach a low viscosity required to guarantee good flow and penetration of the mica tapes, the temperature has to be high, in some cases well above 300°C. In a preferred version this problem is solved by using low-viscosity precursor materials or oligomeric thermoplastic materials instead of fully polymerized thermoplastics. These materials will react to the final thermoplastic polymer inside the moulding tool 15 in the next steps. Examples for precursor materials are lactames to form Polyamides and for the oligomers cyclic butadiene terephtalate to form PBT. Furthermore, according to the requirements of the application, softeners, tougheners, and antioxidants can be added to the thermoplastic. Shown in the Figs in a schematic way is the insulation 4 around the conductor bar 3 fabricated in a way wholly disclosed in this document.

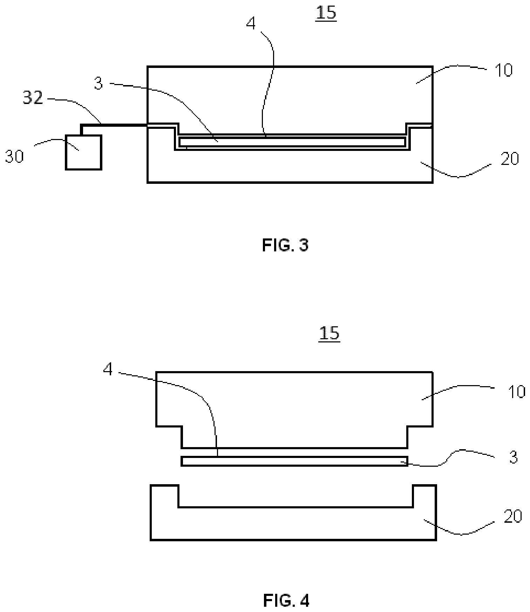

Fig. 2 is a schematic side view of the moulding tool 15 according to Fig. 1. Here, the first part 10 and the second part 20 of the moulding tool 15 are pressed together to essentially encompass the conductor bar 3. The pressure force is usually induced by a hydraulic device comprised by the moulding tool 15 to generate pressures in the range of 1bar to 50bar. In the view of Fig. 2 left from the moulding tool 15 a feeder 30 is arranged which is connected to the moulding tool 15 via a feed channel 32 to supply a thermoplastic material to the moulding tool 15. The feed channel 32 is connected to the moulding tool 15 space between the first part 10 and the second part 20, whereas the space is formed with the first part 10 and the second part 20 pressed against each other. The feed channel 32 serves for inserting a thermoplastic material or a precursor material from the feeder 30 to the inside of the moulding tool 15 to impregnate the conductor bar 3. In the view of Fig. 2 right from the moulding tool 15 a vacuum pump 40 or vacuum generator is arranged which is connected to the moulding tool 15 via a flexible hose 42. Here, again the flexible hose 42 is connected to a space or channel formed between the first part 10 and the second part 20. The vacuum pump 40 generates a vacuum within the moulding tool 15 in the second manufacturing step. Furthermore, a heating device (not shown) is comprised by the moulding tool 15 to apply heat to the inside of the moulding tool 15 to the end of melting the thermoplastic material. This procedure of applying a vacuum and heat in the moulding tool 15 is similar to the concept of vacuum assisted resin transfer moulding (VRTM). In an example of the invention described the moulding tool 15 is preheated and the vacuum pump 40 creates a vacuum in the area in which the conductor bar 3 is placed according to Fig. 2. Then, liquid material is injected from the feeder 30. In this step hydrostatic pressure smaller than the closing pressure of the moulding tool 15 is applied to the feeder 30 and the vacuum pump 40 is disconnected. In case the material is an oligomeric thermoplastic or a precursor material applied to the conductor bar 3 as described above, it will be polymerized inside the mould tool 15 caused by means of heating. Starting materials as caprolactam contain additionally activators and catalysts. Compared to commonly used epoxy materials or epoxy, caprolactam as well as cyclic butylene terephthalate exhibit a melt viscosity of 0.02-0.03 Pas at operation temperature. This is well below the upper threshold value for impregnation with standard epoxies which is around 0.3 Pas. Furthermore, according to the requirements of the application, softeners, tougheners, and antioxidants can be added to the supply feeder 30. The moulding tool 15 applies a pressure in the range of approximately 1 bar to 20 bar to the conductor bar 3. The polymerization is done in the third manufacturing step, shown by example in Fig. 3. In Fig. 3 the moulding tool 15 is still heated to heat up the conductor bar 3. The application of a vacuum by the vacuum pump 40 is not necessary in the third manufacturing step but it has some advantages over the manufacturing without applying a vacuum. The thermoplastic material is melted in the moulding tool 15, fills the gaps at the mica and also the gaps at the glass-mica if applied. The thermoplastic material forms an insulation 4 for the conductor bar 3, then referred to as insulated conductor bar 3. The excessive thermoplastic material is pressed out when in a low viscosity condition.

Fig. 4 is a schematic side view of a moulding tool 15 according to Fig. 3 in a fourth manufacturing step with the two parts 10, 20 removed from each other and the insulated conductor bar 3 to be removed from the moulding tool 15. Finally, the heated conductor bar 3 is cooled down and removed from the moulding tool 15. Thermoplastic polymers on the conductor bar 3 as described here do not need to be cured which usually needs hours of dwell time inside the moulding tool 15 in the state of the art. The conductor bar 3 according to this disclosure can be removed from the moulding tool 15 as soon as the temperature in the moulding tool 15 is below the melting temperature of the thermoplastic material. The process time of the insulated conductor bar is reduced by the invention thus.

The polymers, oligomeres or other polymer-precursors contain inorganic fillers, preferably micrometer or nanometer-sized partices of oxides and nitrides, such as Al2O3, Si02, Ti02, BaTi03, BN, Ti3N4. Such fillers help to improve the dielectric properties and/or thermal conductivity of the insulation.

While the invention has been described in detail with reference to exemplary embodiments thereof, it will be apparent to one skilled in the art that various changes can be made, and equivalents employed, without departing from the scope of the invention. The foregoing description of the preferred embodiments of the invention has been presented for purposes of illustration and description. It is not intended to be exhaustive or to limit the invention to the precise form disclosed, and modifications and variations are possible within the scope of the appended claims.

In practice the materials used and the dimensions can be chosen at will according to requirements and to the state of the art.

### REFERENCE NUMBERS

- 3: conductor bar or insulated conductor bar
- 4: insulation
- 10: first part moulding tool
- 15: moulding tool
- 20: second part moulding tool
- 30: feeder for thermoplastic material
- 32: feed channel
- 40: vacuum pump
- 42: flexible hose

## Claims

1. A method for impregnating an insulated conductor bar (3) comprising the steps of covering the conductor bar (3) with a tape of mica material on a fabric, covering the conductor bar (3) with a thermoplastic material, wherein for fusing the mica material on the r fabric and the thermoplastic material the method of calendering is used, inserting the conductor bar (3) into a moulding tool (15), heating the moulding tool (15), evacuating the moulding tool (15) by means of a vacuum pump (40), and afterwards applying pressure to the moulding tool (15), the method further comprising the steps of dispersing or scattering the thermoplastic material as powder at the mica material onto the fabric, fusing the mica material on the fabric with the thermoplastic material, whereas the thermoplastic material comprises inorganic fillers and the inorganic fillers exhibit a grain size between 20nm and 20µm and/or the inorganic fillers are oxides of nitrides,
**characterized in that** the fabric is a thermoplastic carrier fabric, and the thermoplastic carrier fabric is melted creating a feedstock for impregnation.

2. A method for impregnating an insulated conductor bar (3) according to claim 1, further comprising the step of injecting a molten thermoplastic material into the moulding tool (15) by means of a feeder (30).

3. An insulated conductor bar (3) for an electric machine having an insulation (4) from a tape made from mica material on a fabric, whereas comprising a thermoplastic material on the mica material on the fabric, wherein fusing the mica material on the fabric and the thermoplastic material is accomplished by the method of calendering,
wherein the conductor bar comprises thermoplastic material that was dispersed or scattered as powder at the mica material onto the a fabric and the conductor bar comprises mica material on the fabric that was fused with the thermoplastic material, and the thermoplastic material comprises inorganic fillers and the inorganic fillers exhibit a grain size between 20nm and 20µm and/or the inorganic fillers are oxides of nitrides,
**characterized in that** the fabric is a thermoplastic carrier fabric, and the thermoplastic carrier fabric was melted creating a feedstock for impregnation.

4. The insulated conductor bar (3) according to claim 3, **characterized in that** the thermoplastic material was created from at least a precursor material, at least a monomer, or at least an oligomer, converted to the thermoplastic material in a moulding tool (15) for moulding the insulated conductor bar (3).

5. The insulated conductor bar (3) according to claim 4, **characterized in that** the thermoplastic material was the precursor of polyamide 6 (PA6), caprolactam, or a cyclic oligomer of the Polybutylen-terephthalat (PBT).

6. The insulated conductor bar (3) according to claim 5, **characterized in that** the thermoplastic material is fully polymerized in its final form and/or semicrystalline.

7. Use of a thermoplastic material for manufacturing an insulated conductor bar (3) of an electric machine according to claim 3.

## Patentansprüche

1. Verfahren zum Imprägnieren eines isolierten Leiterstabs (3), umfassend die Schritte des Bedeckens des Leiterstabs (3) mit einem Band aus Glimmermaterial auf einem Gewebe, des Bedeckens des Leiterstabs (3) mit einem thermoplastischen Material, wobei zum Verschmelzen des Glimmermaterials auf dem Gewebe und des thermoplastischen Materials das Verfahren des Kalandrierens verwendet wird, des Einsetzens des Leiterstabs (3) in ein Formwerkzeug (15), des Erwärmens des Formwerkzeugs (15), des Evakuierens des Formwerkzeugs (15) mittels einer Vakuumpumpe (40) und des anschließenden Beaufschlagens des Formwerkzeugs (15) mit Druck, wobei das Verfahren ferner die Schritte des Dispergierens oder Streuens des thermoplastischen Materials als Pulver an dem Glimmermaterial auf das Gewebe, des Verschmelzens des Glimmermaterials auf dem Gewebe mit dem thermoplastischen Material umfasst, wobei das thermoplastische Material anorganische Füllstoffe umfasst und die anorganischen Füllstoffe eine Korngröße zwischen 20 nm und 20 µm aufweisen und/oder die anorganischen Füllstoffe Oxide von Nitriden sind, **dadurch gekennzeichnet, dass** das Gewebe ein thermoplastisches Trägergewebe ist und das thermoplastische Trägergewebe unter Bildung eines Ausgangsmaterials für die Imprägnierung geschmolzen wird.

2. Verfahren zum Imprägnieren eines isolierten Leiterstabs (3) nach Anspruch 1, ferner umfassend den Schritt des Einspritzens eines geschmolzenen thermoplastischen Materials in das Formwerkzeug (15) mittels eines Zuführers (30).

3. Isolierter Leiterstab (3) für eine elektrische Maschine mit einer Isolierung (4) aus einem Band aus Glimmermaterial auf einem Gewebe, wobei auf dem Glimmermaterial auf dem Gewebe ein thermoplastisches Material aufgebracht ist, wobei das Verschmelzen des Glimmermaterials auf dem Gewebe und des thermoplastischen Materials durch das Verfahren des Kalandrierens erreicht wird, wobei der Leiterstab thermoplastisches Material umfasst, das als Pulver an dem Glimmermaterial auf dem Gewebe dispergiert oder gestreut wurde und der Leiterstab Glimmermaterial auf dem Gewebe umfasst, das mit dem thermoplastischen Material verschmolzen wurde, und das thermoplastische Material anorganische Füllstoffe umfasst und die anorganischen Füllstoffe eine Korngröße zwischen 20 nm und 20 µm aufweisen und/oder die anorganischen Füllstoffe Oxide oder Nitriden sind, **dadurch gekennzeichnet, dass** das Gewebe ein thermoplastisches Trägergewebe ist und das thermoplastische Trägergewebe unter Erzeugung eines Ausgangsmaterials für die Imprägnierung geschmolzen wurde.

4. Isolierter Leiterstab (3) nach Anspruch 3, **dadurch gekennzeichnet, dass** das thermoplastische Material aus mindestens einem Vorläufermaterial, mindestens einem Monomer oder mindestens einem Oligomer erzeugt wurde, das in einem Formwerkzeug (15) zum Formen des isolierten Leiterstabs (3) in das thermoplastische Material überführt wurde.

5. Isolierter Leiterstab (3) nach Anspruch 4, **dadurch gekennzeichnet, dass** das thermoplastische Material der Vorläufer von Polyamid 6 (PA6), Caprolactam oder ein zyklisches Oligomer des Polybutylen-Terephthalats (PBT) ist.

6. Isolierter Leiterstab (3) nach Anspruch 5, **dadurch gekennzeichnet, dass** das thermoplastische Material in seiner endgültigen Form vollständig polymerisiert und/oder teilkristallin ist.

7. Verwendung eines thermoplastischen Materials zur Herstellung eines isolierten Leiterstabs (3) einer elektrischen Maschine nach Anspruch 3.

## Revendications

1. Procédé d'imprégnation d'une barre conductrice isolée (3) comprenant les étapes consistant à couvrir la barre conductrice (3) avec un ruban de matériau de mica sur un tissu, couvrir la barre conductrice (3) avec un matériau thermoplastique, dans lequel pour fusionner le matériau de mica sur le tissu et le matériau thermoplastique le procédé de calandrage est utilisé, insérer la barre conductrice (3) dans un outil de moulage (15), chauffer l'outil de moulage (15), faire le vide dans l'outil de moulage (15) au moyen d'une pompe à vide (40), et par la suite appliquer une pression à l'outil de moulage (15), le procédé comprenant en outre les étapes consistant à disperser ou diffuser le matériau thermoplastique en poudre au niveau du matériau de mica sur le tissu, fusionner le matériau de mica sur le tissu avec le matériau thermoplastique, en considérant que le matériau thermoplastique comprend des charges inorganiques et que les charges inorganiques présentent une granulométrie entre 20 nm et 20 µm et/ou les charges inorganiques sont des oxydes de nitrures, **caractérisé en ce que** le tissu est un tissu porteur thermoplastique, et le tissu porteur thermoplastique est fondu en créant un produit de départ pour imprégnation.

2. Procédé d'imprégnation d'une barre conductrice isolée (3) selon la revendication 1, comprenant en outre l'étape d'injection d'un matériau thermoplastique fondu dans l'outil de moulage (15) au moyen d'un dispositif d'alimentation (30).

3. Barre conductrice isolée (3) pour une machine électrique ayant une isolation (4) à partir d'un ruban constitué de matériau de mica sur un tissu, en considérant qu'il comprend un matériau thermoplastique sur le matériau de mica sur le tissu, dans lequel un fusionnement du matériau de mica sur le tissu et du matériau thermoplastique est accompli par le procédé de calandrage, dans lequel la barre conductrice comprend un matériau thermoplastique qui a été dispersé ou diffusé sous forme de poudre au niveau du matériau de mica sur le tissu et la barre conductrice comprend un matériau de mica sur le tissu qui a été fusionné avec le matériau thermoplastique, et le matériau thermoplastique comprend des charges inorganiques et les charges inorganiques présentent une granulométrie entre 20 nm et 20 |jm et/ou les charges inorganiques sont des oxydes de nitrures, **caractérisée en ce que** le tissu est un tissu porteur thermoplastique, et le tissu porteur thermoplastique a été fondu en créant un produit de départ pour imprégnation.

4. Barre conductrice isolée (3) selon la revendication 3, **caractérisée en ce que** le matériau thermoplastique a été créé à partir d'au moins un matériau précurseur, au moins un monomère, ou au moins un oligomère, converti en le matériau thermoplastique dans un outil de moulage (15) pour mouler la barre conductrice isolée (3).

5. Barre conductrice isolée (3) selon la revendication 4, **caractérisée en ce que** le matériau thermoplastique était le précurseur de polyamide 6 (PA6), du caprolactame, ou un oligomère cyclique du polybutylène-téréphtalate (PBT).

6. Barre conductrice isolée (3) selon la revendication 5, **caractérisée en ce que** le matériau thermoplastique est complètement polymérisé sous sa forme finale et/ou semi-cristallin.

7. Utilisation d'un matériau thermoplastique pour la fabrication d'une barre conductrice isolée (3) d'une machine électrique selon la revendication 3.
